(19) **Europäisches Patentamt**
**European Patent Office**
**Office européen des brevets**

(11) **EP 4 270 262 A1**

(12) **EUROPEAN PATENT APPLICATION**

(43) Date of publication:
**01.11.2023 Bulletin 2023/44**

(21) Application number: **23168771.6**

(22) Date of filing: **19.04.2023**

(51) International Patent Classification (IPC):
**G06N 10/60** $^{(2022.01)}$   **G06N 5/01** $^{(2023.01)}$

(52) Cooperative Patent Classification (CPC):
**G06N 10/60;** G06N 5/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.04.2022 JP 2022071906**

(71) Applicant: **DENSO CORPORATION**
**Kariya-city, Aichi-pref., 448-8661 (JP)**

(72) Inventor: **KADOWAKI, Tadashi**
**Kariya-city, Aichi-pref.,, 448-8661 (JP)**

(74) Representative: **Winter, Brandl - Partnerschaft mbB**
**Alois-Steinecker-Straße 22**
**85354 Freising (DE)**

(54) **PROCESSING SYSTEM, PROCESSING DEVICE, PROCESSING METHOD, AND PROCESSING PROGRAM**

(57)    Quantum annealing and a quantum gate for processing qubits to solve a combinatorial optimization problem are controlled. In an optimization process, an optimal value of the contribution of an orthogonal magnetic field function for each qubit is determined based on a final state in an annealing process. An optimal qubit has an optimal evaluation index for evaluating the final state in the annealing process. The optimization process includes: extracting the optimal qubit based on phase information of a control qubit; determining the field-strength parameter according to the phase information of the control qubit; and outputting an optimal solution by mapping a set of field-strength parameters determined for all qubits.

**FIG. 12**

EP 4 270 262 A1

**Description**

TECHNICAL FIELD

The present disclosure relates to a processing technique for solving a combinatorial optimization problem with binary variables.

BACKGROUND

Non-Patent Literature 1 discloses quantum annealing for processing qubits to solve a combinatorial optimization problem.

PRIOR ART LITERATURE

[Non-Patent Literature]

[Non-Patent Literature 1] Tadashi Kadowaki and Hidetoshi Nishimori, "Quantum annealing in the transverse Ising model." Phys. Rev. E 58, 5355 (1998)

SUMMARY

However, when only quantum annealing that only changes the transverse magnetic field with time is applied, there may be a difficulty in order to output the optimal solution with high accuracy in the short processing time expected for the quantum computing system.

An object of the present disclosure is to provide a processing system that achieves both reduction in processing time and high-accuracy output of optimal solutions. Another object of the present embodiments is to provide a processing device that achieves both a reduction in processing time and high-accuracy output of optimal solutions. Another object of the present embodiments is to provide a processing method that achieves both a reduction in processing time and a high accuracy output of optimal solutions. Another object of the present embodiments is to provide a processing program that achieves both reduction in processing time and high-accuracy output of optimal solutions.

Hereinafter, technical means of the present disclosure for solving the difficulties will be described. Note that the reference numerals in parentheses in the claims and this column indicate the corresponding relationship with the specific means described in the embodiments described in detail later, and do not limit the technical scope of the present disclosure.

According to the first aspect of the present embodiments, a processing system controls quantum annealing and a quantum gate for processing qubits to solve a combinatorial optimization problem with the binary variable. The processing system includes a processor.

The processor is configured to execute:

an annealing process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function; and

an optimization process for sequentially determining an optimal value of the contribution of the orthogonal magnetic field function based on a final state in the annealing process for each qubit that constitutes an optimal solution of the combinatorial optimization problem.

The qubit with an optimal evaluation index for evaluating the final state in the annealing process, in which a field-strength parameter that provides a maximum value of the orthogonal magnetic field function for the qubit before optimization, is defined as an optimal qubit.

The optimization process includes:

extracting the optimal qubit based on phase information of a control qubit in which a variation of the evaluation index caused by a variation in the field-strength parameter is phase-kicked back by a quantum gate circuit;

determining the field-strength parameter, which is an optimal value of an extracted optimal qubit, according to the phase information of the control qubit in which the variation is phase-kicked back by the quantum gate circuit; and

outputting the optimal solution by mapping a set of the field-strength parameter determined for all qubits.

According to a second aspect of the present embodiments, a processing device controls quantum annealing and a quantum gate for processing qubits to solve a combinatorial optimization problem with the binary variable. The processing device includes a processor.

A process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function is defined as an annealing process.

A process for sequentially determining an optimal value of the contribution of the orthogonal magnetic field function based on a final state in the annealing process for each qubit that constitutes an optimal solution of the combinatorial optimization problem is defined as an optimization process.

The qubit with an optimal evaluation index for evaluating the final state in the annealing process, in which a field-strength parameter that provides a maximum value of the orthogonal magnetic field function for the qubit before optimization, is defined as an optimal qubit.

The processor is configured to execute the optimization process including:

extracting the optimal qubit based on phase information of a control qubit in which a variation of the evaluation index caused by a variation in the field-strength parameter is phase-kicked back by a quantum gate circuit;

determining the field-strength parameter, which is an optimal value of an extracted optimal qubit, according to the phase information of the control qubit in which the variation is phase-kicked back by the quantum gate circuit; and

outputting the optimal solution by mapping a set of the field-strength parameter determined for all qubits.

According to a third aspect of the present embodiments, a processing method is executed by a processor for controlling quantum annealing and a quantum gate for processing qubits to solve a combinatorial optimization problem with the binary variable.

The processing method includes:

an annealing process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function; and

an optimization process for sequentially determining an optimal value of the contribution of the orthogonal magnetic field function based on a final state in the annealing process for each qubit that constitutes an optimal solution of the combinatorial optimization problem.

The qubit with an optimal evaluation index for evaluating the final state in the annealing process, in which a field-strength parameter that provides a maximum value of the orthogonal magnetic field function for the qubit before optimization, is defined as an optimal qubit.

The optimization process further includes:

extracting the optimal qubit based on phase information of a control qubit in which a variation of the evaluation index caused by a variation in the field-strength parameter is phase-kicked back by a quantum gate circuit;

determining the field-strength parameter, which is an optimal value of an extracted optimal qubit, according to the phase information of the control qubit in which the variation is phase-kicked back by the quantum gate circuit; and

outputting the optimal solution by mapping a set of the field-strength parameter determined for all qubits.

According to a fourth aspect of the present embodiments, a processing method is executed by a processor for controlling quantum annealing and a quantum gate for processing qubits to solve a combinatorial optimization problem with the binary variable.

A process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function, is defined as an annealing process.

A process for sequentially determining an optimal value of the contribution of the orthogonal magnetic field function based on a final state in the annealing process for each qubit that constitutes an optimal solution of the combinatorial optimization problem, is defined as an optimization process.

The qubit with an optimal evaluation index for evaluating the final state in the annealing process, in which a field-strength parameter that provides a maximum value of the orthogonal magnetic field function for the qubit before optimization, is defined as an optimal qubit.

The processing method includes the optimization process further including:

extracting the optimal qubit based on phase information of a control qubit in which a variation of the evaluation index caused by a variation in the field-strength parameter is phase-kicked back by a quantum gate circuit;
determining the field-strength parameter, which is an optimal value of an extracted optimal qubit, according to the phase information of the control qubit in which the variation is phase-kicked back by the quantum gate circuit; and
outputting the optimal solution by mapping a set of the field-strength parameter determined for all qubits.

According to a fifth aspect of the present embodiments, a processing program includes instructions, executed by a processor and stored in a storage medium, for controlling quantum annealing and a quantum gate for processing qubits to solve a combinatorial optimization problem with the binary variable.
The instructions cause the processor to execute:

an annealing process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function; and
an optimization process for sequentially determining an optimal value of the contribution of the orthogonal magnetic field function based on a final state in the annealing process for each qubit corresponding to the binary variable that constitutes an optimal solution of the combinatorial optimization problem.

The qubit with an optimal evaluation index for evaluating the final state in the annealing process, in which a field-strength parameter that provides a maximum value of the orthogonal magnetic field function for the qubit before optimization, is defined as an optimal qubit.
The optimization process further includes:

extracting the optimal qubit based on phase information of a control qubit in which a variation of the evaluation index caused by a variation in the field-strength parameter is phase-kicked back by a quantum gate circuit;
determining the field-strength parameter, which is an optimal value of an extracted optimal qubit, according to the phase information of the control qubit in which the variation is phase-kicked back by the quantum gate circuit; and
outputting the optimal solution by mapping a set of the field-strength parameter determined for all qubits.

According to a sixth aspect of the present embodiments, a processing program includes instructions, executed by a processor and stored in a storage medium, for controlling quantum annealing and a quantum gate for processing qubits to solve a combinatorial optimization problem with the binary variable.
A process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function is defined as an annealing process.
A process for sequentially determining an optimal value of the contribution of the orthogonal magnetic field function based on a final state in the annealing process for each qubit that constitutes an optimal solution of the combinatorial optimization problem is defined as an optimization process.
The qubit with an optimal evaluation index for evaluating the final state in the annealing process, in which a field-strength parameter that provides a maximum value of the orthogonal magnetic field function for the qubit before optimization, is defined as an optimal qubit.
The instructions cause the processor to execute the optimization process including:

extracting the optimal qubit based on phase information of a control qubit in which a variation of the evaluation index caused by a variation in the field-strength parameter is phase-kicked back by a quantum gate circuit;
determining the field-strength parameter, which is an optimal value of an extracted optimal qubit, according to the phase information of the control qubit in which the variation is phase-kicked back by the quantum gate circuit; and
outputting the optimal solution by mapping a set of the field-strength parameter determined for all qubits.

In the optimization process of these first to sixth aspects, the optimal value of the contribution of the orthogonal magnetic field function is sequentially determined for each qubit corresponding to the binary variable based on the final state in the annealing process for individually and temporally controlling each contribution of the cost function, the transverse magnetic field function, and the orthogonal magnetic field function. Therefore, according to the optimization processes of the first to sixth aspects, an optimal qubit with an optimal evaluation index for evaluating the final state in the annealing process, in which a field-strength parameter that provides a maximum value of the orthogonal magnetic field function for the qubit before optimization, is extracted based on the phase information of the control qubit in which a variation of the evaluation index caused by a variation in the field-strength parameter is phase-kicked back by a quantum gate circuit.

According to this, even if the annealing time in the annealing process is shortened, the field-strength parameter that is the optimal value of the extracted optimal qubit is sequentially determined according to the phase information of the control qubit in which the variation of the evaluation index is phase-kicked back by the quantum gate circuit, so that the solution space of the combinatorial optimization problem can be narrowed down. Accordingly, accurate optimal solution can be output by mapping the set of the field-strength parameters determined for all qubits. Therefore, both the reduction of the annealing time and the output of the optimal solution with high accuracy are achieved.

BRIEF DESCRIPTION OF THE DRAWINGS

FIG. 1 is a block diagram illustrating an overall configuration of a processing system according to an embodiment;
FIG. 2 is a block diagram illustrating a functional configuration of the processing system according to the embodiment;
FIG. 3 is a time transition diagram for explaining an annealing process according to the embodiment;
FIG. 4 is a graph for explaining the annealing process according to the embodiment;
FIG. 5 is a diagram showing a table for explaining an optimization process according to the embodiment;
FIG. 6 is a block diagram illustrating a quantum gate circuit of one embodiment;
FIG. 7 is a diagram showing a table for explaining the optimization process according to the embodiment;
FIG. 8 is a diagram showing a table for explaining the optimization process according to the embodiment;
FIG. 9 is a diagram showing a table for explaining the optimization process according to the embodiment;
FIG. 10 is a graph for explaining the optimization process according to the embodiment;
FIG. 11 is a graph for explaining the optimization process according to the embodiment; and
FIG. 12 is a sequence diagram illustrating a processing method according to the embodiment.

EMBODIMENTS FOR CARRYING OUT INVENTION

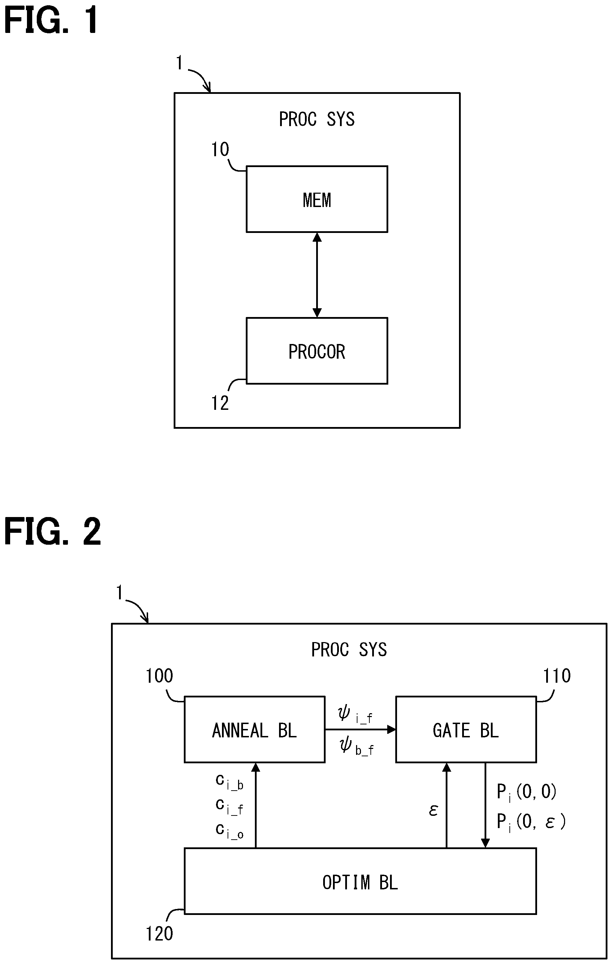

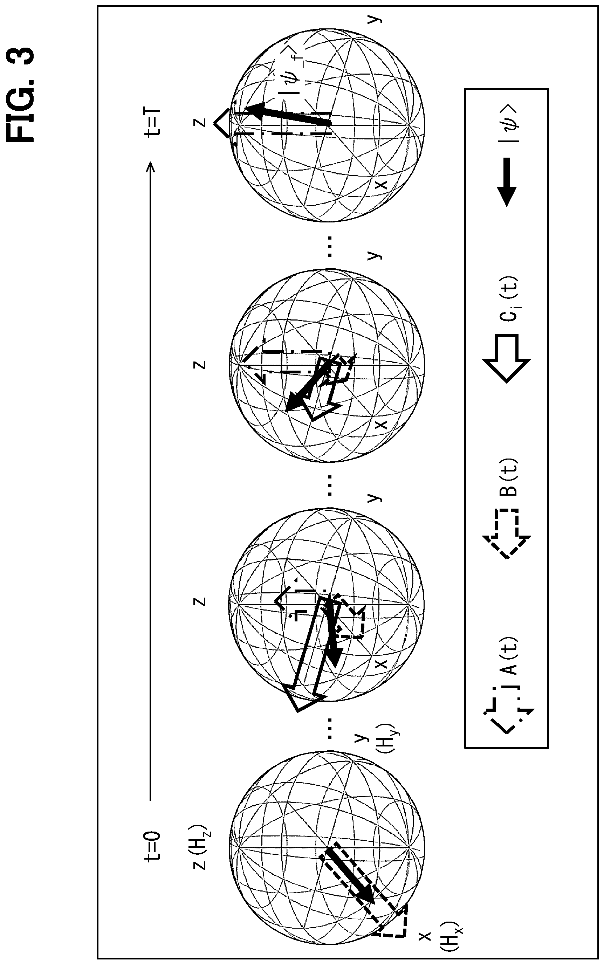

Hereinafter, an embodiment of the present disclosure will be described with reference to the drawings.
A processing system 1 of an embodiment shown in FIG. 1 is a quantum computing system configured to solve a combinatorial optimization problem with binary variables by controlling a quantum annealing with qubits. The processing system 1 includes, as a plurality of dedicated computers, an annealing quantum computer that executes quantum operations by a quantum annealing method, and a gate-based quantum computer that executes quantum operations by a quantum gate method. The processing system 1 may include a classical computer that performs classical operations with bits as a dedicated computer in combination with each of the annealing quantum computer and the gate-based quantum computer. At least one of the annealing quantum computer and the gate-based quantum computer, which are main components of the processing system 1, may be, for example, a NISQ (noisy intermediate scale quantum) device.
A dedicated computer that constitutes the processing system 1 has a plurality of memories 10 and processors 12 each. The plurality of memories 10 are at least one type of non-transitory tangible storage medium, such as a semiconductor memory, a magnetic medium, and an optical medium, for non-transitory storage of computer readable programs and data. The plurality of processors 12 includes at least a quantum processing unit capable of realizing the quantum annealing method and a quantum processing unit capable of realizing the quantum gate method. The processor 12 of the classical computer as the dedicated computer constituting the processing system 1 that is combined with the quantum computer may include at least one type of, for example, a CPU (Central Processing Unit), a GPU (Graphics Processing Unit), an RISC (Reduced Instruction Set Computer) CPU, and so on.
In the processing system 1, the processor 12 respectively control the quantum annealing and the quantum gates that process qubits, and executes the instructions included in the processing programs stored in a plurality of memories 10 to solve the combinatorial optimization problem with the binary variables. Thereby, the processor 12 constructs a plurality of functional blocks for controlling the quantum annealing and the quantum gates respectively to solve the combinatorial optimization problem. The functional blocks built in the processing system 1 includes an annealing block 100, a gate block 110 and an optimization block 120 as shown in FIG. 2.
The annealing block 100 is implemented by a set of a processor 12 and a memory 10 in an annealing quantum computer, or a combination of the set with a set of a processor 12 and a memory 10 in a classical computer. The annealing block 100 performs an annealing process by the quantum annealing system. Specifically, the annealing block 100 of the present embodiment is configured to perform the annealing process such that each contribution of a cost function Hz, a transverse magnetic field function $H_x$, and an orthogonal magnetic field function Hy shown in FIG. 3 is individually controlled depending on time. Hereinafter, the annealing process by the annealing block 100 is referred to as a QA (quantum annealing) process.

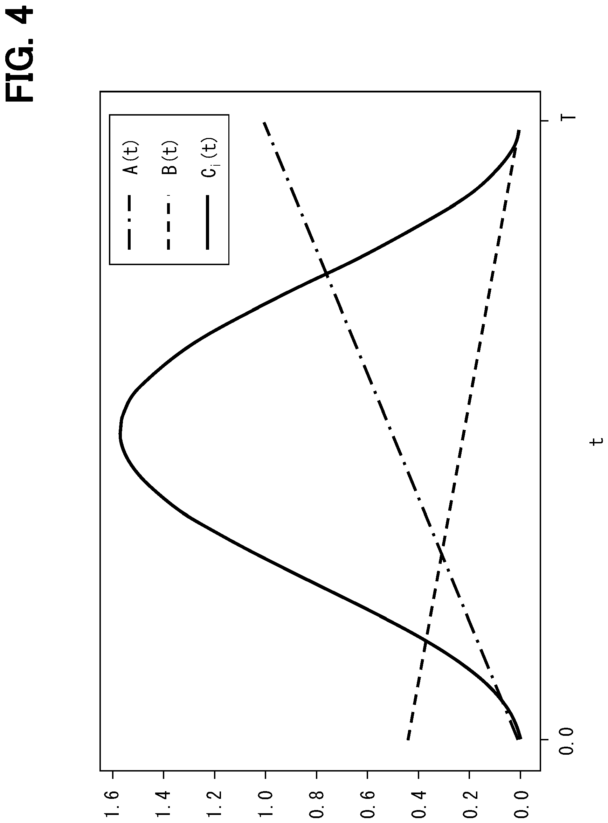

The QA process is based on an Ising model (i.e. spin glass model) in which qubits associate with binary variables of the combinatorial optimization problem. As expressed in the formula 1, in the QA processing, the cost function $H_z$, the transverse magnetic field function $H_x$, and the orthogonal magnetic field function $H_y$ are combined to be a total Hamiltonian H. In formula 1, t is defined as the elapsed time in the QA process, and varies in a numerical range between 0 and T. As shown in FIGS. 3 and 4, specifically in the present embodiment, t is defined as the time until the annealing time T described later.

[Formula 1]

$$\mathcal{H} = A(t)\mathcal{H}_z + B(t)\mathcal{H}_x + \mathcal{H}_y$$

A cost function $H_z$ is defined as a z component of the total Hamiltonian H shown in FIG. 3. The cost function Hz expressed in the formula 2 is a function that is converged by optimization in the combinatorial optimization problem. In the formula 2, $\sigma_i{}^z$ and $\sigma_j{}^z$ are Pauli matrices of the z component for a pair of qubits with indexes i and j, a combination of which is to be optimized. In the formula 2, $J_{ij}$ is a coupling constant expressed in the formula 3 using a weight matrix $w_{ij}$ of the combinatorial optimization problem. In particular, the coupling constant $J_{ij}$ of the present embodiment is defined as a random variable that satisfies the formulas 4, 5 such that the interaction based on SK (Sherrington-Kirkpatrick) Model is applied to the combinatorial optimization problem. Here, N in the formula 5 is the number of the qubits corresponding to the number of the binary variables and is the number of the spins constituting the cost function $H_z$. In the combinatorial optimization problem using such cost function $H_z$, the combinations of N qubits having the $2^N$ combinations are optimized.

[Formula 2]

$$\mathcal{H}_z = -\sum_{i<j} J_{ij}\sigma_i^z \sigma_j^z$$

[Formula 3]

$$J_{ij} = -w_{ij}$$

[Formula 4]

$$p(J_{ij}) \sim \frac{1}{\sqrt{2\pi s^2}} \exp\left(-\frac{J_{ij}^2}{2s^2}\right)$$

[Formula 5]

$$s^2 = \frac{1}{N-1}$$

A coefficient function A(t) acting on the cost function $H_z$ in the formula 1 is expressed in the formula 6 as a time function shown in FIG. 3 for independently controlling the cost function $H_z$ with time. In the formula 6, t is the elapsed time as in the formula 1. In the formula 6, T is the annealing time from the start to the end of the QA process, and is simplified as a value 1 in the present embodiment. In the formula 6, a is a field-strength parameter for maximizing the coefficient function A(t), and is simplified as a value 1 in the present embodiment.

[Formula 6]

$$A(t) = at/T$$

The transverse magnetic field function $H_x$ is a x component of the total Hamiltonian H shown in FIG. 3. The transverse magnetic field function $H_x$ is expressed in the formula 7 as a function for the quantum fluctuation representing a uniform magnetic field in the x direction orthogonal to the cost function $H_z$ in the z direction. In the formula 7, $\sigma_i^x$ is a Pauli matrix of the x component for a qubit with index i, a combination of which is to be optimized.

[Formula 7]

$$\mathcal{H}_x = -\sum_i \sigma_i^x$$

A coefficient function B(t) acting on the transverse magnetic field function $H_x$ in the formula 1 is expressed in the formula 8 as a time function shown in FIG. 3 for independently controlling the transverse magnetic field function $H_x$ with time. In the formula 8, t is the elapsed time as in the formula 1. In the formula 8, T is the annealing time as in the formula 6. In the formula 8, b is a field-strength parameter for maximizing the coefficient function B(t). In the present embodiment, an optimal parameter, e.g. 0.43, which is tested by experiments in advance is set for the field-strength parameter b.

[Formula 8]

$$B(t) = b(1 - t/T)$$

The orthogonal magnetic field function $H_y$ is a y component of the total Hamiltonian H shown in FIG. 3. The orthogonal magnetic field function $H_y$ is expressed in the formula 9 as a function representing a non-uniform magnetic field in the y direction orthogonal to the cost function $H_z$ in the z direction and the transverse magnetic field function $H_x$ in the x direction. In the formula 9, $\sigma_i^y$ is a Pauli matrix of the y component for a qubit with index i, a combination of which is to be optimized.

[Formula 9]

$$\mathcal{H}_y = -\sum_i C_i(t)\sigma_i^y$$

A coefficient function Ci(t) constituting the orthogonal magnetic field function $H_y$ in the formula 9 is expressed in the formula 10 as a time function shown in FIG. 3 for independently controlling the orthogonal magnetic field function $H_y$ with time. In the formula 10, t is the elapsed time as in the formula 1. In the formula 10, T is the annealing time as in the formula 6. In the formula 10, $c_i$ is a field-strength parameter for maximizing the coefficient function $C_i(t)$ for the qubit with the index i. In the present embodiment, the $c_i$ is set by the optimization block 120 as described later.

[Formula 10]

$$C_i(t) = c_i \sin^2(\pi t/T)$$

Through the QA process, the final state $\psi_f$ of the wave function $\psi$ shown in FIG. 3 for the total Hamiltonian H is acquire based on the time-dependent control of the total Hamiltonian by the quantum annealing. Under time-dependent control of the total Hamiltonian H in the QA process, the final state $\psi_f$ at time t=1 is obtained according to the Schrödinger equation expressed by Formula 11.

[Formula 11]

$$\frac{d}{dt}|\psi\rangle = -i\mathcal{H}|\psi\rangle = -i\big(A(t)\mathcal{H}_z + B(t)\mathcal{H}_x + \mathcal{H}_y\big)|\psi\rangle$$

In the time-dependent control of the QA process, the coefficient function A(t), which can be called the contribution of the cost function $H_z$ to the total Hamiltonian H, is gradually increased from zero to the final value as the time t has elapsed. Particularly, in the time-dependent control of the present embodiment, the output value of the coefficient function A(t) is increased, to the set value of the field-strength parameter a which is an end value, proportionally to the elapsed time t. Further, in the time-dependent control of the QA process, the coefficient function B(t), which can be called the contribution of the transverse magnetic field function $H_x$ to the total Hamiltonian H, is decreased from the initial value to zero as the time t elapses. Particularly, in the time-dependent control of the present embodiment, the output value of the coefficient function B(t) is decreased, from the set value of the field-strength parameter b which is the initial value, proportionally to the elapsed time t. Further, in the time-dependent control of the QA process, the coefficient function $C_i(t)$, which can be called the contribution of the orthogonal magnetic field function $H_y$ to the total Hamiltonian H, is increased from zero to the maximum value as the time t elapses, and then is decreased to zero as the time t elapses. Particularly, in the time-dependent control of the present embodiment, the output value of the coefficient function $C_i(t)$ is varied proportionally to the square of the sine function such that the output value of the coefficient function $C_i(t)$ varies at the midpoint of the elapsed time t to the set value of the field-strength parameter $c_i$ as the maximum value with respect to the qubit with the index i.

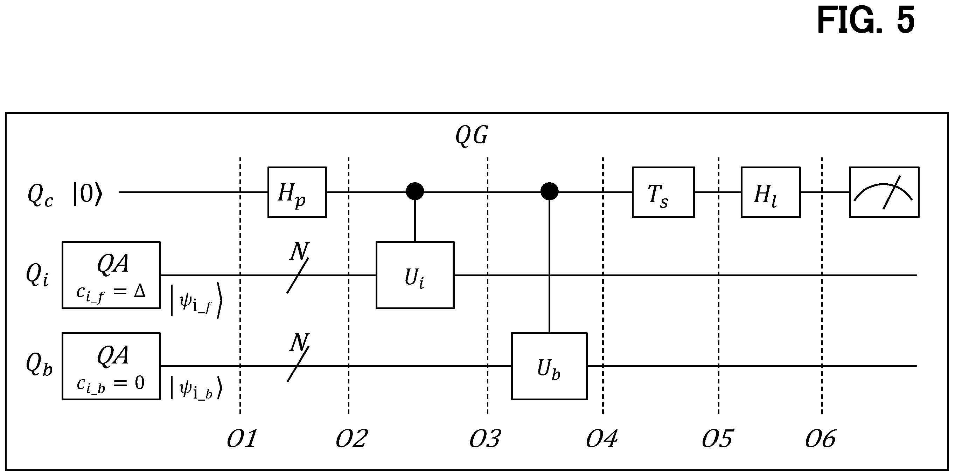

The gate block 110 shown in FIG. 2 is implemented by a set of a processor 12 and a memory 10 in a gate-based quantum computer, or a combination of the set with a set of a processor 12 and a memory 10 in a classical computer. The gate block 110 constructs a quantum gate circuit QG of a quantum gate system as shown in FIG. 5. Specifically, the quantum gate circuit QG receives the control qubit $Q_c$, the analysis qubit $Q_i$, and the reference qubit $Q_b$ as inputs. Here the control qubit $Q_c$ is an ancillary qubit whose input state is initialized to |0>. The analysis qubits $Q_i$ are N target qubits whose input states are initialized to the analysis final state $\psi_{i\_f}$ described below. The reference qubit $Q_b$ is the N target qubits whose input states are initialized to the reference final state $\psi_{b\_f}$ described below. From these, the coupled state of the quantum bits $Q_c$, $Q_i$, $Q_b$ in the input stage (that is, the direct product state of the quantum bits $Q_c$, $Q_i$, $Q_b$ in the operation stage O1 of FIG. 5) is expressed by Formula 12. $\tau$ in Formulas 15 to 19 and 21 to 24 described below is a control variable given as described later.

$$[\text{Formula 12}]$$

$$O1: \left| 0\psi_{i\_f}\psi_{b\_f} \right\rangle$$

The quantum gate circuit QG operates the front-stage Hadamard gate $H_p$ to act on the input control qubit $Q_c$. The front-stage Hadamard gate $H_p$ is a rotation gate that transforms the control qubit $Q_c$ into a superposed state of the states |0> and |1> using the Hadamard matrix of Formula 13. The combined state of the qubits Qc, Qi, and Qb that have undergone the Hadamard transform (that is, the direct product state of the qubits $Q_c$, $Q_i$, $Q_b$ in the operation stage O2 of FIG. 5) is expressed by Formula 14.

$$[\text{Formula 13}]$$

$$H_p = \frac{1}{\sqrt{2}}\begin{pmatrix} 1 & 1 \\ 1 & -1 \end{pmatrix}$$

$$[\text{Formula 14}]$$

$$O2: \left( \left| 0\psi_{i\_f}\psi_{b\_f} \right\rangle + \left| 1\psi_{i\_f}\psi_{b\_f} \right\rangle \right)/\sqrt{2}$$

The quantum gate circuit QG operates an analysis unitary gate $U_i$ to act on an input analysis qubit $Q_i$ by means of a Hadamard-transformed control qubit $Q_c$. The analysis unitary gate $U_i$ is then a control unitary gate that phase-kicks back the eigenvalues of the unitary matrix defined in formula 15 to the control qubit $Q_c$. In the analysis unitary gate $U_i$, an analysis evaluation index $F_i$, which will be described later, is calculated with respect to the analysis final state $\psi_{i\_f}$ of the analysis qubit $Q_i$. The combined state of the qubits $Q_c$, $Q_i$, and $Q_b$ that are phase-kicked back (that is, the direct product state of the qubits $Q_c$, $Q_i$, $Q_b$ in the operation stage O3 of FIG. 5) is expressed by Formula 16.

$$[\text{Formula 15}]$$

$$U_i = \exp\left(-i\mathcal{H}_z\tau\right)$$

[Formula 16]

$$O3: \left( \left| 0 \psi_{i\_f} \psi_{b\_f} \right\rangle + e^{-iF_i\tau} \left| 1 \psi_{i\_f} \psi_{b\_f} \right\rangle \right)/\sqrt{2}$$

The quantum gate circuit QG operates the reference unitary gate $U_b$ to act on the input reference qubit $Q_b$ with a phase-kicked back control qubit $Q_c$. The reference unitary gate $U_b$ is then a control unitary gate that phase-kicks back the eigenvalues of the unitary matrix defined in formula 17 to the control qubit $Q_c$. In the reference unitary gate $U_b$, a reference evaluation index $F_b$, which will be described later, is calculated with respect to the reference final state $\psi_{b\_f}$ of the reference qubit $Q_b$. The combined state of the qubits $Q_c$, $Q_i$, and $Q_b$ that are phase-kicked back (that is, the direct product state of the qubits $Q_c$, $Q_i$, $Q_b$ in the operation stage O4 of FIG. 5) is expressed by Formula 18. From the above, in the quantum gate circuit QG, the two types of unitary gates Ui and $U_b$ act, so that the variation amount $\delta F$ between the analysis evaluation index $F_i$ and the reference evaluation index $F_b$, which constitute the evaluation index F as described later, is phase-kicked back with respect to the control qubit $Q_c$ as expressed by formulas 19 and 20.

[Formula 17]

$$U_b = \exp\left(+i\mathcal{H}_z\tau\right)$$

[Formula 18]

$$O4: \left( \left| 0 \psi_{i\_f} \psi_{b\_f} \right\rangle + e^{-i(F_i - F_b)\tau} \left| 1 \psi_{i\_f} \psi_{b\_f} \right\rangle \right)/\sqrt{2}$$

[Formula 19]

$$O4: \left( \left| 0 \psi_{i\_f} \psi_{b\_f} \right\rangle + e^{-i\delta F\tau} \left| 1 \psi_{i\_f} \psi_{b\_f} \right\rangle \right)/\sqrt{2}$$

[Formula 20]

$$\delta F = F_i - F_b$$

The quantum gate circuit QG operates the phase shift gate $T_s$ to act on the control qubit $Q_c$ in which the variation amount $\delta F$ of the evaluation index F is phase-kicked back. The phase shift gate $T_s$ is a rotation gate that shifts the phase of the control quantum bit $Q_c$ by the shift matrix of Formula 21 according to the control variable $\varepsilon$ input to the quantum gate circuit QG as described later. The combined state of the qubits $Q_c$, $Q_i$, and $Q_b$ that are phase-shifted (that is, the direct product state of the qubits $Q_c$, $Q_i$, $Q_b$ in the operation stage O5 of FIG. 5) is expressed by Formula 22.

[Formula 21]

$$T_s = \begin{pmatrix} 1 & 0 \\ 0 & e^{i\varepsilon\tau} \end{pmatrix}$$

[Formula 22]

$$O5: \left( \left| 0 \psi_{i\_f} \psi_{b\_f} \right\rangle + e^{-i(\delta F - \varepsilon)\tau} \left| 1 \psi_{i\_f} \psi_{b\_f} \right\rangle \right)/\sqrt{2}$$

The quantum gate circuit QG operates the latter-stage Hadamard gate $H_l$ to act on the phase-shifted control quantum bit $Q_c$. The latter-stage Hadamard gate $H_l$ is a rotation gate that again transforms the control qubit $Q_c$ using a Hadamard matrix similar to formula 13. The combined state of the qubits $Q_c$, $Q_i$, and $Q_b$ that is latter-stage transformed by the Hadamard gate (that is, the direct product state of the qubits $Q_c$, $Q_i$, $Q_b$ in the operation stage O6 of FIG. 5) is expressed by Formula 23.

[Formula 23]

$$O6 : \left(1 + e^{-i(\delta F - \varepsilon)\tau} \big| 0\psi_{i\_f}\psi_{b\_f} \big\rangle \right)/2$$
$$+ \left(1 - e^{-i(\delta F - \varepsilon)\tau} \big| 1\psi_{i\_f}\psi_{b\_f} \big\rangle \right)/2$$

The quantum gate circuit QG outputs measurement data obtained by measuring the phase information of the control quantum bit $Q_c$ that is latter-stage transformed by the Hadamard gate. The measurement data output at this time is a probability $P_i(0, \varepsilon)$ that is defined as the probability amplitude for the state |0> of the control qubit $Q_c$ in the Formula 24 for extracting the information about the phase change according to the variation amount $\delta F$ of the evaluation index F. Here, particularly in this embodiment, the probability of appearance of state |0> by the repeated operations (for example, 1000 times or more) using the quantum gate circuit QG is output as estimated measurement data of $P_i(0, \varepsilon)$ for each qubit.

[Formula 24]

$$P_i(0, \varepsilon) = \big| 1 + e^{-i(\delta F - \varepsilon)\tau} \big|^2 / 4$$
$$= (1 + \cos(\delta F - \varepsilon)\tau)/2$$

The optimization block 120 shown in FIG. 2 may be provided by a set of the processor 12 and the memory 10 in an annealing quantum computer, a set of the processor 12 and the memory 10 in a gate-based quantum computer, a set of the processor 12 and the memory 10 in a classical computer, or at least two of the sets cooperated with each other. The optimization block 120 performs an optimization process to narrow down the solution space of the combinatorial optimization problem in order to solve the combinatorial optimization problem with binary variables. Specifically, the optimization block 120 is configured to perform the optimization process by sequentially determining the optimal value of the contribution of the orthogonal magnetic field function $H_y$ for each qubit of the combinatorial optimization problem based on the final state $\psi_{\_f}$ obtained in the QA process. Hereinafter, the optimization process performed by the optimization block 120 is referred to as QGO (Quantum Greedy Optimization) process.

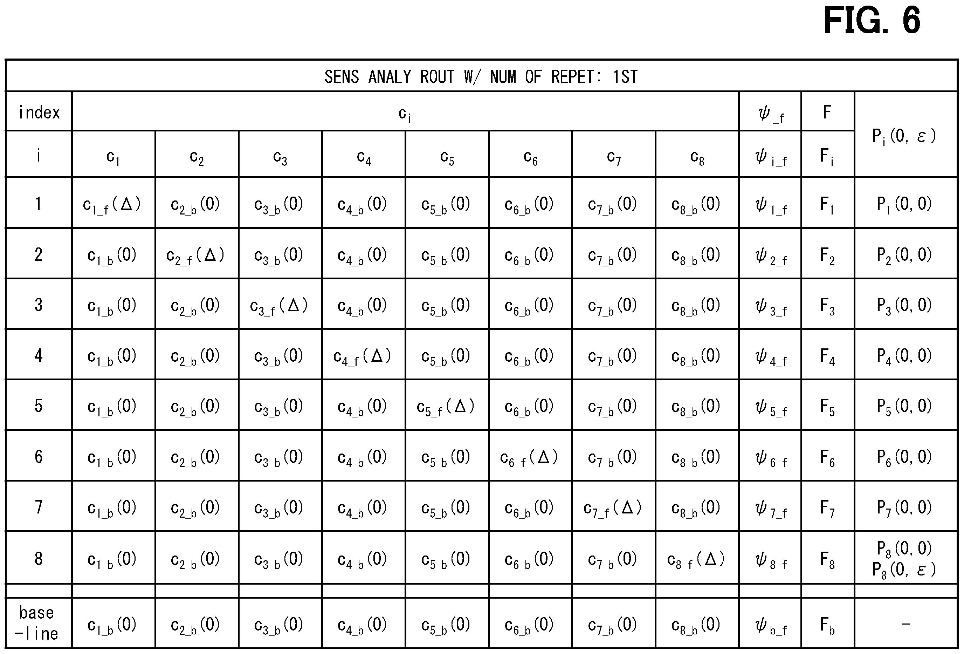

In the QGO process, the field-strength parameter $c_i$ that provides the maximum strength and the sign of the orthogonal magnetic field function $H_y$ for each of N qubits whose combination with the number of combinations of $2^N$ is to be optimized, i.e. for each of all qubits with indexes i (i = 1 to N) which have not optimized yet, is initialized to the reference field-strength parameter $c_{i\_b}$ expressed in the formula 25. At this time, each reference field-strength parameter $c_{i\_b}$ is set to a value of 0 as shown in FIG. 6 especially for any qubit with index i in this embodiment. In FIGS 6 and 7 to 11 later described, a case where N is 8 (that is, i is an integer value between 1 and 8) is shown as an example.

[Formula 25]

$$c_{i\_b} = 0$$

In the QGO process, with respect to the field-strength parameter $c_i$ of each qubit with the index i before the optimization, a varied field-strength parameter $c_{i\_f}$ is set by adding a minute quantity $\Delta$ to the reference field-strength parameter $c_{i\_b}$ as expressed in the formula 26, in addition to the reference field-strength parameter $c_{i\_b}$. In the QGO process in which the reference field-strength parameter $c_{i\_b}$ is initialized to zero, the setting of the varied field-strength parameter $c_{i\_f}$ (=$\Delta$) is executed as shown in FIG. 6. In the present embodiment, the minute quantity $\Delta$ is set to be the optimal quantity such as 0.1, which is tested by experiment in advance.

[Formula 26]

$$c_{i\_f} = c_{i\_b} + \Delta = \Delta$$

In the QGO process, the sensitivity analysis subroutine is repeatedly executed based on the reference field-strength parameter $c_{i\_b}$ obtained by initializing the field-strength parameter $c_i$ and the varied field-strength parameter $c_{i\_f}$ which is obtained by slightly changing the reference field-strength parameter $c_{i\_b}$. In the sensitivity analysis subroutine of the QGO process, the field-strength parameters $c_{i\_b}$ and $c_{i\_f}$ are passed from the optimization block 120 to the QA process of the annealing block 100 for each qubit before optimization as shown in FIG. 2.

In response to the passing, the annealing block 100 performs the QA process by the quantum annealing for the total Hamiltonian H that includes the varied field-strength parameter $c_{i\_f}$ corresponding to the index i and the reference field-strength parameter $c_{i\_b}$ that does not correspond to the index i for each qubit before optimization, as shown in FIG. 6. As a result, the analysis final state $\psi_{i\_f}$ is obtained as the final state $\psi_{\_f}$ of the wave function $\psi$ for the total Hamiltonian H for each qubit before optimization. The qubit before optimization may mean the qubit which has not optimized yet. At the same time, the annealing block 100 performs the QA process by the quantum annealing for the total Hamiltonian H that includes the reference field-strength parameters $c_{i\_b}$ with all indexes i, in common with all qubits before optimization as shown in FIG. 6. As a result, the reference final state $\psi_{b\_f}$ is obtained as the final state $\psi_{\_f}$ of the wave function $\psi$ for the total Hamiltonian H, in common with all qubits before optimization.

The analysis final state $\psi_{i\_f}$ and the reference final state $\psi_{b\_f}$ for each quantum bit before optimization obtained in this way are passed as measurement data by QA processing in the annealing block 100 as shown in FIG. 2 to the gate block 110 in accordance with the instruction from the optimization block 120. Along with this, in the sensitivity analysis subroutine, the control variable $\varepsilon$, which is set to a value of 0 for all qubits before optimization, is passed from the optimization block 120 to the gate block 110.

In such a sensitivity analysis subroutine, an evaluation index F that gives an individual evaluation for each qubit before optimization as shown in FIG. 6 is defined as an analysis evaluation index $F_i$ for the passed analysis final state $\psi_{i\_f}$. In particular, the analysis evaluation index $F_i$ is expressed by the energy value in formula 27 for the analysis final state $\psi_{i\_f}$ when the field-strength parameter $c_i$ for each qubit before optimization is varied from the reference field-strength parameter $c_{i\_b}$ to the varied field-strength parameter $c_{i\_f}$. Further, in the sensitivity analysis subroutine, the evaluation index F for giving the reference evaluation common to all qubits before optimization as shown in FIG. 6 is defined as the reference evaluation index $F_b$ with respect to the passed reference final state $\psi_{b\_f}$. Particularly, the reference evaluation index $F_b$ is defined as the energy value of the reference final state $\psi_{b\_f}$ expressed in the formula 28 similar to the analysis evaluation index $F_i$.

[Formula 27]

$$F_i = \langle \psi_{i\_f} | \mathcal{H}_z | \psi_{i\_f} \rangle$$

[Formula 28]

$$F_b = \langle \psi_{b\_f} | \mathcal{H}_z | \psi_{b\_f} \rangle$$

Therefore, in the gate block 110, the final states $\psi_{i\_f}$ and $\psi_{b\_f}$ and the control variable $\varepsilon$ set to 0 are input to the quantum gate circuit QG for each qubit before optimization in response to the above-described data handover in the sensitivity analysis subroutine. As a result, as the probability $P_i(0, \varepsilon)$ when the control variable $\varepsilon$ is set to 0, a probability $P_i(0,0)$ for measuring the magnitude of the phase change corresponding to the variation amount $\delta F$ of the evaluation indices $F_i$ and $F_b$ with respect to the state $|0\rangle$ of the control qubit $Q_c$ is output for each qubit before optimization. The probability $P_i(0,0)$ output in this way is passed to the optimization block 120 as measurement data by the quantum gate circuit QG in the gate block 110 as shown in FIG. 2.

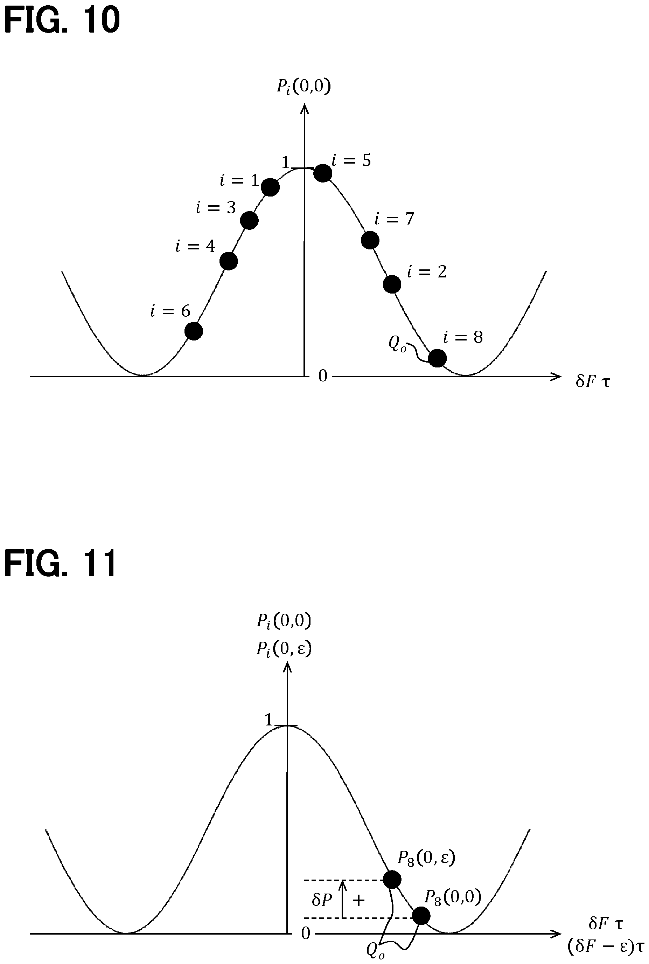

In the sensitivity analysis subroutine, the optimization block 120 executes the optimization operation to extract one qubit with the optimal analysis evaluation index $F_i$ among all qubits before optimization to which the probability $P_i(0, 0)$ has been passed, as the optimal qubit $Q_o$ shown in FIG. 10. In the optimization operation at this time, the amount of variation $\delta F$ caused by the variation of the field-strength parameter $c_i$ from the reference field-strength parameter $c_{i\_b}$ to the varied field-strength parameter $c_{i\_f}$ with respect to the energy value between the evaluation indices $F_i$ and $F_b$ is based on the phase change measured as probability $P_i(0,0)$ among the phase information of the control qubit Qc that is phase-kicked back by the quantum gate circuit QG.

Therefore, the optimization operation in the sensitivity analysis subroutine is executed according to Formula 29, so that the optimal qubit $Q_o$ is extracted such that the probability $P_i(0, 0)$ is minimum in response that the absolute value of the variation amount $\delta F$ is maximum, among all qubits before optimization. Here, particularly in this embodiment, since the index of the optimal qubit $Q_o$ is treated as i after the optimization operation, the index i before the optimization operation is formally expressed using k and m in Formula 29. Further, in the present embodiment, since $P_i(0, \varepsilon)$ including the probability $P_i(0, 0)$ is represented by the above Formula 24 using a cosine function, the condition for making the control variable $\tau$ sufficiently small is given by Formula 30 as a condition for functioning the algorithm proper. Here, FIGS. 6 and 10 show cases where the qubit with index i=8 is extracted as the optimal qubit $Q_o$ in the first sensitivity

analysis subroutine.

[Formula 29]

$$i \leftarrow \operatorname*{argmin}_{k \in \{m | c_m = 0\}} P_k(0,0)$$

[Formula 30]

$$(\max|\delta F| + \varepsilon)\tau < \pi$$

In the sensitivity analysis subroutine, optimization block 120 shown in FIG. 2 directs the annealing block 100 to pass to the gate block 110 the analysis final state $\psi_{i\_f}$ and the reference final state $\psi_{b\_f}$ corresponding to the extracted optimal qubit $Q_o$. Along with this, in the sensitivity analysis subroutine, the control variable $\varepsilon$, which is set to a value greater than zero and corresponds to the optimal qubit $Q_o$, is passed from the optimization block 120 to the gate block 110. Here, particularly in this embodiment, the control variable $\varepsilon$ exceeding the value of 0 is set to an optimal value such as 0.1, which has been tested by demonstration experiments in advance.

In response to these handover, in the gate block 110, the final states $\psi_{i\_f}$ and $\psi_{b\_f}$ corresponding to the optimal qubit $Q_o$ and the control variable $\varepsilon$ exceeding the zero value are input to the quantum gate circuit QG. As a result, as the probability $P_i(0, \varepsilon)$ when the control variable $\varepsilon$ is set to exceed 0, a probability $P_i(0,0)$ for measuring the direction of the phase change corresponding to the variation amount $\delta F$ of the evaluation indices $F_i$ and $F_b$ with respect to the state $|0>$ of the control qubit $Q_c$ is output for the optimal qubit $Q_o$. The probability $P_i(0, \varepsilon)$ output in this way is passed to the optimization block 120 as measurement data by the quantum gate circuit QG in the gate block 110 as shown in FIG. 2.

In the sensitivity analysis subroutine, as described above, the optimization block 120 determines, as the optimal field-strength parameter $c_{i\_o}$, the field-strength parameter $c_i$ that is the optimal value of the optimal qubit $Q_o$ to which the probabilities $P_i(0, 0)$ and $P_i(0, \varepsilon)$ have been passed. At this time, the optimal field-strength parameter $c_{i\_o}$ is determined according to the direction of the phase change measured as the magnitude relationship between the probabilities $P_i(0, 0)$ and $P_i(0, \varepsilon)$ in the phase information of the control qubit $Q_c$ in which the amount of variation $\delta F$ caused by the change of the field-strength parameter $c_i$ from the reference field-strength parameter $c_{i\_b}$ to the varied field-strength parameter $c_{i\_f}$ with respect to the energy value between the evaluation indices $F_i$ and $F_b$ is phase-kicked back by the quantum gate circuit QG. The determination of the optimal field-strength parameter $c_{i\_o}$ is executed by Formulas 31 and 32, so that the sign of the difference $\delta P$ between the probabilities $P_i(0, 0)$ and $P_i(0, \varepsilon)$ as shown in FIG. 11 is reflected in the determined optimal field-strength parameter $c_{i\_o}$. Here, $c_c$ in the Formula 31 is set to be the optimal parameter, e.g. $\pi/2$ (that is 1.57) which is tested in advance by the experiment in the present embodiment, as a constant parameter common to all N qubits. Note that FIG. 11 shows an example of the sign of the difference $\delta P$ for the qubit with index i=8 extracted as the optimal qubit $Q_o$ in the first sensitivity analysis subroutine.

[Formula 31]

$$c_{i\_o} = -c_c \operatorname{sgn} \delta P$$

[Formula 32]

$$\delta P = P_i(0, \varepsilon) - P_i(0,0)$$

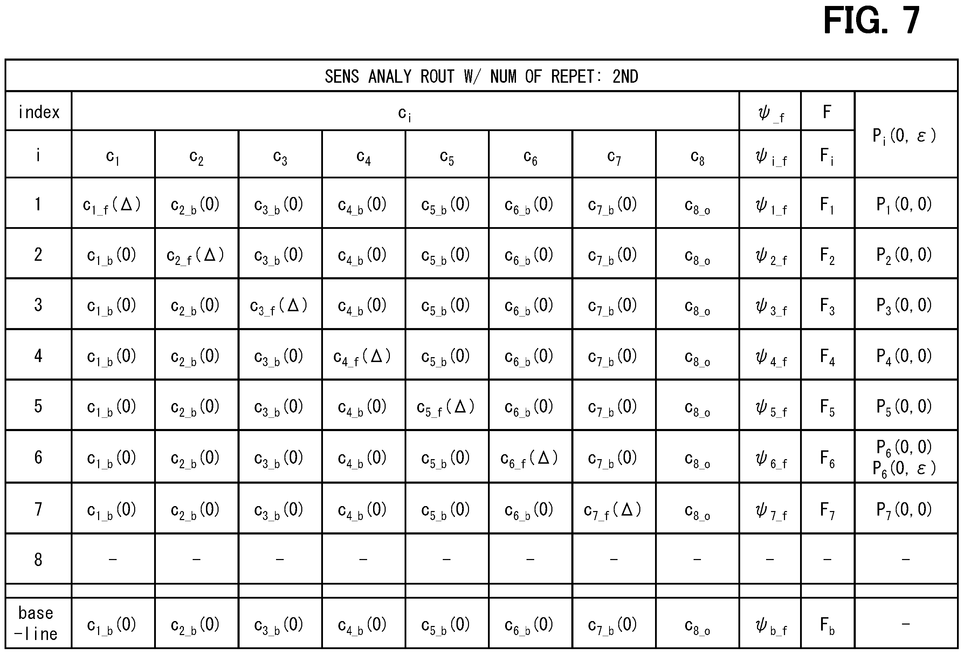

The sensitivity analysis subroutine of the optimization block 120 is repeated each time the optimal field-strength parameter $c_{i\_o}$ is determined as the optimal value by changing the target to be passed to the QA process by the annealing block 100, as shown in FIGS. 7-9. That is, in the second and subsequent cycles of the sensitivity analysis subroutine, for all optimal qubits $Q_o$ that have already been optimized in the preceding cycles of the sensitivity analysis subroutine, the corresponding optimal field-strength parameter $c_{i\_o}$ with index i is passed instead of the corresponding reference field-strength parameter $c_{i\_b}$ with index i. In the QA process in which the analysis final state $\psi_{i\_f}$ is obtained, the reference field-strength parameters $c_{i\_b}$ with the index i which does not correspond to each qubit before optimization other than the optimal qubit but correspond to the optimal field-strength parameter $c_{i\_o}$ are replaced with the optimal field-strength parameter $c_{i\_o}$. At the same time, in the QA process for obtaining the reference final state $\psi_{b\_f}$, the reference field-strength parameter $c_{i\_b}$ with the index i corresponding to the optimal field-strength parameter $c_{i\_o}$ is replaced by the optimal field-strength parameter $c_{i\_o}$ of the index i.

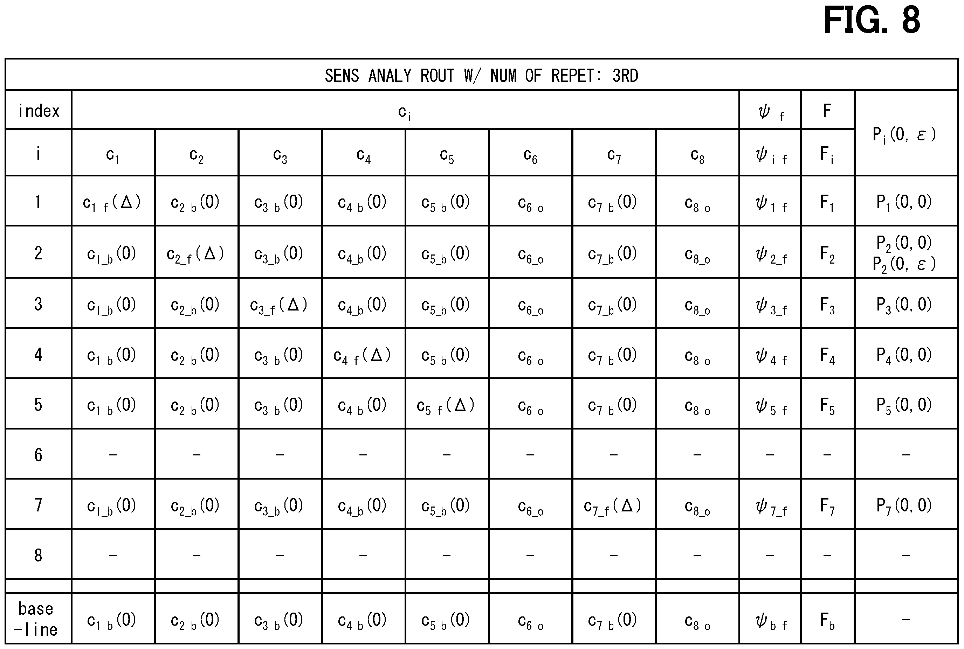

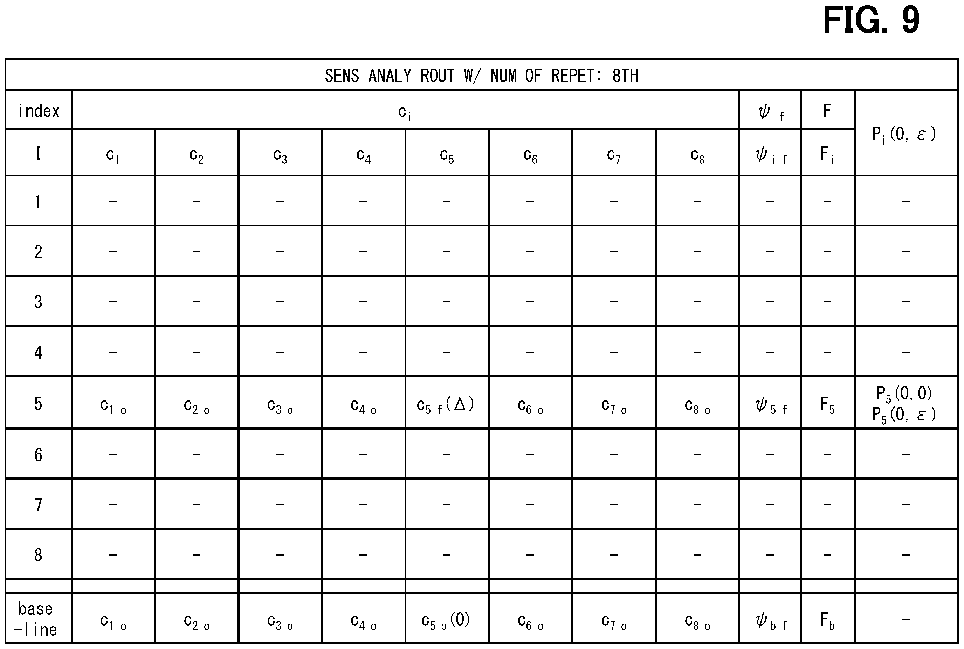

Thus, in the second and subsequent sensitivity analysis subroutines, the optimal qubit Qo is extracted among the remaining qubits before optimization excluding the optimal qubit $Q_o$ in the previous sensitivity analysis subroutines, based on the magnitude of the phase change measured by the quantum gate circuit QG of the gate block 110. Furthermore, in the second and subsequent sensitivity analysis subroutines, the optimal field-strength parameter $c_{i\_o}$ is determined for the extracted optimal qubit $Q_o$ according to the phase change direction measured by the quantum gate circuit QG of the gate block 110. FIG. 7 shows an example that, after the qubit with index i=8 is extracted as the optimal qubit $Q_o$ in the first sensitivity analysis subroutine, the qubit with index i=6 is extracted as the optimal qubit $Q_o$ by QGO processing in the second sensitivity analysis subroutine. FIG. 8 shows an example that, after the qubits with indices i = 8 and i=6 are extracted as the optimal qubit $Q_o$ in the first and second sensitivity analysis subroutines, respectively, the qubit with index i = 2 is extracted as the optimal qubit $Q_o$ in the QGO processing in the third sensitivity analysis subroutine. FIG. 9 shows an example that, after the qubits other than index i = 5 are extracted as the optimal qubit $Q_o$ in the 1st to 7th sensitivity analysis subroutines, the qubit with index i = 5 is extracted as the optimal qubit $Q_o$ by the QGO processing in the 8th sensitivity analysis subroutine.

In the QGO process, the optimization block 120 determines the optimal field-strength parameters $c_{i\_o}$ for all N qubits by repeating the sensitivity analysis subroutine for the number of times that coincides with the number of qubits, i.e., N. After the optimal field-strength parameters $c_{i\_o}$ for all qubits are determined in the QGO process, the optimal solution OA of the combinatorial optimization problem is output by mapping the set of the optimal field-strength parameters $c_{i\_o}$ to the solution of the combinatorial optimization problem using the formula 33. In the QGO process, the output optimal solution OA is stored in the memory 10. Here, the optimal solution OA may be stored to be retained after the processing system 1 is turned off. Alternatively, the stored optimal solution OA may be deleted when the processing system 1 is turned off.

[Formula 33]

$$OA = (sgn\ c_{1\_o}, sgn\ c_{2\_o}, ..., sgn\ c_{N\_o})$$

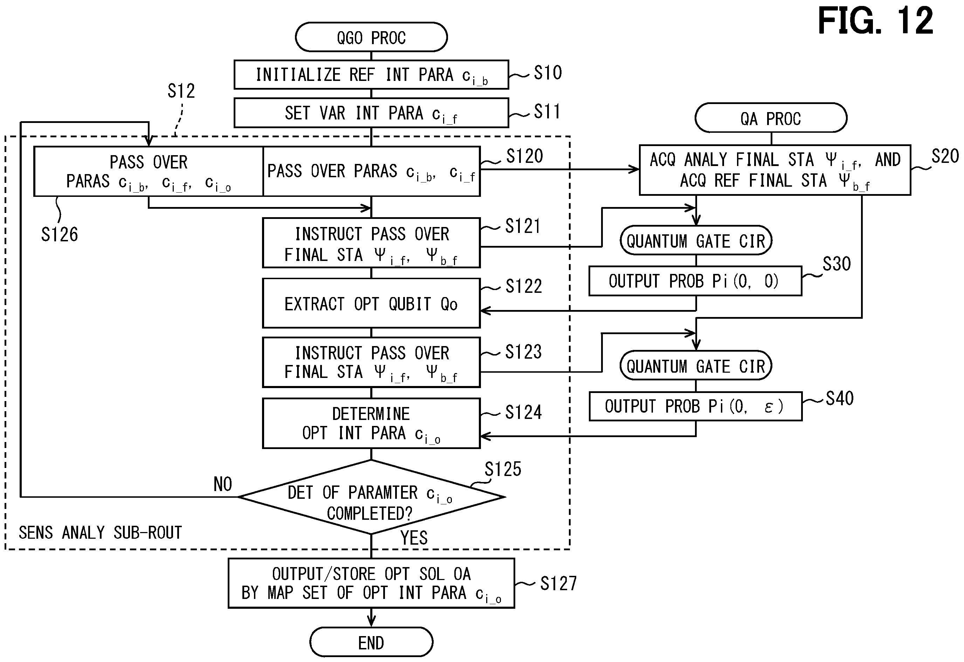

With the cooperation of the blocks 100, 110 described above, the processing method in which the processing system 1 controls the quantum annealing with qubits to solve the combinatorial optimization problem with binary variables is performed according to the sequence diagram shown in FIG. 12. The processing method shown in the sequence diagram is performed in response to the instruction from the operator of the processing system 1, for example. Here, S in the sequence diagram means steps executed by instructions included in each processing program stored in multiple memories 10.

In S10 of the QGO process, the optimization block 120 initializes the field-strength parameters $c_i$ for all qubits before optimization to the reference field-strength parameter $c_{i\_b}$. In S11 of the QGO process, the optimization block 120 sets the varied field-strength parameter $c_{i\_f}$ for each qubit, which is obtained by changing the reference field-strength parameter $c_{i\_b}$ for each qubit before optimization. In S12 of the QGO process, the optimization block 120 repeatedly performs the sensitivity analysis subroutine which includes S120-S127.

Specifically, in S120 of the sensitivity analysis subroutine, the optimization block 120 passes the reference field-strength parameter $c_{i\_b}$ and the varied field-strength parameter $c_{i\_f}$ to the annealing block 100. In S20 of the QA process started in response to the handover, the annealing block 100 acquires the analysis final state $\psi_{i\_f}$, which is independent for each qubit before optimization, by the quantum annealing. Further in S20, the annealing block 100 acquires the reference final state $\psi_{b\_f}$, which is common to the qubits before optimization, by the quantum annealing different from the quantum annealing for obtaining the analysis final state $\psi_{i\_f}$.

In S121 of the sensitivity analysis subroutine, the optimization block 120 instructs the annealing block 100 to pass the analysis final state $\psi_{i\_f}$ and the reference final state $\psi_{b\_f}$ for each quantum bit before optimization obtained in S20 to the gate block 110. At the same time, the optimization block 120 passes the control variable $\varepsilon$ set to 0 to the gate block 110 at S121. In S30 started in response to these handover, the gate block 110 outputs individual probabilities $P_i(0, 0)$ for each qubit before optimization from the quantum gate circuit QG.

At S122 of the sensitivity analysis subroutine, the optimization block 120 extracts the optimal qubit $Q_o$ based on the magnitude of the phase change measured as probability $P_i(0,0)$ at S30. That is, the extraction of the optimal qubit $Q_o$ in S122 is based on the phase information of the control qubit $Q_c$ whose phase is kicked back by the quantum gate circuit QG.

In S123 of the sensitivity analysis subroutine, the optimization block 120 instructs the annealing block 100 to pass the analysis final state $\psi_{i\_f}$ and the reference final state $\psi_{b\_f}$ corresponding to the optimal qubit $Q_o$ extracted at S122 to the gate block 110 among the analysis final state $\psi_{i\_f}$ and the reference final state $\psi_{b\_f}$ for each qubit before optimization obtained at S20. At the same time, the optimization block 120 passes the control variable $\varepsilon$ set to exceed 0 to the gate block 110 at S123. In S40 started in response to these handovers, the gate block 110 outputs the probability $P_i(0, \varepsilon)$ for the optimal qubit $Q_o$ extracted in S122 from the quantum gate circuit QG.

In S124 of the sensitivity analysis subroutine, the optimization block 120 determines the optimal field-strength parameter $c_{i\_o}$ for the optimal qubit $Q_o$ extracted in S122, according to the direction of the phase change measured as the magnitude relationship between the probabilities $P_i(0, 0)$ and $P_i(0, \varepsilon)$ in S30 and S40. In S125 of the sensitivity analysis subroutine, the optimization block 120 determines whether the determination of the optimal field-strength parameter $c_{i\_o}$ has been completed for all N qubits.

When a negative determination is made in S125, S126 is performed instead of S120 to repeat the sensitivity analysis subroutine. In S126, the optimization block 120 passes, to the annealing block 100, the determined optimal field-strength parameter $c_{i\_o}$ instead of the reference field-strength parameter $c_{i\_b}$ with the corresponding index i, and the reference field-strength parameter $c_{i\_b}$ and the varied field-strength parameter $c_{i\_f}$ of the other indexes as in S120. In response to this handover, S20, S121, S30, S122, S123, S40, S124, and S125 are executed with the qubits other than the optimal qubit $Q_o$ in the previous subroutine as the remaining qubits before optimization.

In contrast, when a positive determination is made in S125, the sensitivity analysis subroutine ends and the process proceeds to S127. In S127 of the QGO process, the optimization block 120 outputs the optimal solution OA of the combinatorial optimization problem by mapping the set of the optimal field-strength parameters $c_{i\_o}$ determined for all N qubits. Further in S127, the optimization block 120 stores the output optimal solution OA to the memory 10. Thus, one cycle of the process shown in the sequence diagram ends.

(Operation Effects)

In the QGO process of the present embodiment, the optimal values of the contribution of the orthogonal magnetic field function $H_y$ are sequentially determined for each qubit based on the final state $\psi_f$ of the QA process for independently controlling the contributions of the cost function $H_z$, the transverse magnetic field function $H_x$, and the orthogonal magnetic field function $H_y$ with depending on time. Therefore, according to the QGO processing of the present embodiment, the optimal qubit $Q_o$ in which the evaluation index F for evaluating the final state $\psi_f$ in the QA processing, in which the field-strength parameter $c_i$ for providing the maximum value of the orthogonal magnetic field function $H_y$ for the qubit before optimization, is extracted based on the phase information of the control qubit $Q_c$ obtained by phase-kickback of the variation amount $\delta F$ of the evaluation index F caused by the variation of the field-strength parameter $c_i$ by the quantum gate circuit QG.

According to this, even if the annealing time in the QA process is shortened, the field-strength parameter $c_i$ that is the optimal value of the extracted optimal qubit $Q_o$ is sequentially determined according to the phase information of the control qubit $Q_c$ in which the variation amount $\delta F$ of the evaluation index F is phase-kicked back by the quantum gate circuit QG, so that the solution space of the combinatorial optimization problem can be narrowed down. Accordingly, accurate optimal solution OA can be output by mapping the set of the field-strength parameters $c_i$ determined for all qubits. Therefore, accurate optimal solution OA can be obtained with shorter annealing time. Accurate optimal solution OA (i.e. optimal solution OA with high accuracy) may mean the optimal solution with large probability, or the solution with the cost function $H_z$ having lower value after optimization.

(Other Embodiments)

Although one embodiment has been described, the present disclosure should not be limited to the above embodiment and may be applied to various other embodiments within the scope of the present disclosure.

In the optimization block 120 that performs S122 to S124 of a modification example, two or more qubits $Q_o$ may be extracted in one sensitivity analysis subroutine. In this case, the optimal field-strength parameter $c_{i\_o}$ may be determined for each optimal qubit $Q_o$. In the annealing block 100 that performs S20 of a modification example, the time-dependent control may be realized by transforming, by time-dependent unitary transformations, Pauli matrix $\sigma_i^y$ of the y component expressed in the formula 9 into the time-dependent Pauli matrix $\sigma_i^x$ of the x component and Pauli matrix $\sigma_i^z$ of the z component to obtain new total Hamiltonian H.

In addition to the above, the above-described embodiments and modifications may be implemented using a computer device or a semiconductor device (such as a semiconductor chip) having a processor 12 and a memory 10 for executing at least the QGO processing of the processing system 1.

This specification discloses a plurality of technical ideas listed below and a plurality of combinations thereof.

(Technical idea 1)

A processing system controls quantum annealing and a quantum gate for processing qubits to solve a combinatorial optimization problem with the binary variable. The processing system includes a processor (12).

The processor is configured to execute:

an annealing process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function; and

an optimization process for sequentially determining an optimal value of the contribution of the orthogonal magnetic field function based on a final state in the annealing process for each qubit that constitutes an optimal solution of the combinatorial optimization problem.

The qubit with an optimal evaluation index for evaluating the final state in the annealing process, in which a field-strength parameter that provides a maximum value of the orthogonal magnetic field function for the qubit before optimization, is defined as an optimal qubit.

The optimization process further includes:

extracting the optimal qubit based on phase information of a control qubit in which a variation of the evaluation index caused by a variation in the field-strength parameter is phase-kicked back by a quantum gate circuit (QG);

determining the field-strength parameter, which is an optimal value of an extracted optimal qubit, according to the phase information of the control qubit in which the variation is phase-kicked back by the quantum gate circuit; and

outputting the optimal solution by mapping a set of the field-strength parameter determined for all qubits.

(Technical idea 2)

In the processing system according to technical idea 1, the optimization process includes: extracting the optimal qubit based on the magnitude of the phase change from the phase information of the control qubit in which the variation amount is phase-kicked back by the quantum gate circuit.

(Technical idea 3)

In the processing system according to technical idea 1 or 2, the optimization process includes: determining the field-strength parameter as the optimal value of the optimal qubit according to the direction of the phase change from the phase information of the control qubit in which the variation amount is phase-kicked back by the quantum gate circuit.

(Technical idea 4)

In the processing system according to any one of technical ideas 1 to 3, the optimization process includes: extracting an optimal qubit in which the final state energy value is optimum as an evaluation index.

(Technical idea 5)

In the processing system according to any one of technical ideas 1 to 3, the optimization process includes: extracting an optimal qubit that has an optimal evaluation index when a field-strength parameter initialized to 0 for a qubit before optimization.

(Technical idea 6)

In the processing system according to any one of technical ideas 1 to 3, the initialized field-strength parameter is defined as the reference field-strength parameter, and the field-strength parameter varied from the reference field-strength parameter is defined as the varied field-strength parameter.

The optimization process includes: extracting the optimal qubit based on phase information obtained by phase-kickback of the variation amount caused by variation of the reference field-strength parameter and the varied field-strength parameter by a quantum gate circuit.

(Technical idea 7)

The processing system according to any one of technical ideas 1 to 6, further includes a storage medium (10). The optimization process includes: storing the optimal solution in the storage medium.

(Technical idea 8)

In the processing system according to any one of technical ideas 1 to 7, the annealing process includes: acquiring the final state of the wave function for the total Hamiltonian of the cost function, the transverse magnetic field function, and the orthogonal magnetic field function based on the time control of the total Hamiltonian by quantum annealing.

(Technical idea 9)

In the processing system according to any one of technical ideas 1 to 7, the annealing process includes:

increasing the contribution of the cost function from 0 to the final value over time;
decreasing the contribution of the transverse magnetic field function from an initial value to a zero value over time; and
increasing the contribution of the orthogonal magnetic field function from 0 value to the maximum value over time and then decreasing the contribution to 0 value over time.

(Technical idea 10)

A processing device controls quantum annealing and a quantum gate for processing qubits to solve a combinatorial optimization problem with the binary variable. The processing device includes a processor (12).
A process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function is defined as an annealing process.
A process for sequentially determining an optimal value of the contribution of the orthogonal magnetic field function based on a final state in the annealing process for each qubit that constitutes an optimal solution of the combinatorial optimization problem is defined as an optimization process.
The qubit with an optimal evaluation index for evaluating the final state in the annealing process, in which a field-strength parameter that provides a maximum value of the orthogonal magnetic field function for the qubit before optimization, is defined as an optimal qubit.
The processor is configured to execute:

extracting the optimal qubit based on phase information of a control qubit in which a variation of the evaluation index caused by a variation in the field-strength parameter is phase-kicked back by a quantum gate circuit (QG);
determining the field-strength parameter, which is an optimal value of an extracted optimal qubit, according to the phase information of the control qubit in which the variation is phase-kicked back by the quantum gate circuit; and
outputting the optimal solution by mapping a set of the field-strength parameter determined for all qubits.

(Technical idea 11)

A processing method is executed by a processor (12) for controlling quantum annealing and a quantum gate for processing qubits to solve a combinatorial optimization problem with the binary variable.
The processing method includes:

an annealing process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function; and
an optimization process for sequentially determining an optimal value of the contribution of the orthogonal magnetic field function based on a final state in the annealing process for each qubit that constitutes an optimal solution of the combinatorial optimization problem.

The qubit with an optimal evaluation index for evaluating the final state in the annealing process, in which a field-strength parameter that provides a maximum value of the orthogonal magnetic field function for the qubit before optimization, is defined as an optimal qubit.
The optimization process further includes:

extracting the optimal qubit based on phase information of a control qubit in which a variation of the evaluation index caused by a variation in the field-strength parameter is phase-kicked back by a quantum gate circuit (QG); determining the field-strength parameter, which is an optimal value of an extracted optimal qubit, according to the phase information of the control qubit in which the variation is phase-kicked back by the quantum gate circuit; and outputting the optimal solution by mapping a set of the field-strength parameter determined for all qubits.

(Technical idea 12)

A processing method is executed by a processor (12) for controlling quantum annealing and a quantum gate for processing qubits to solve a combinatorial optimization problem with the binary variable.

A process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function, is defined as an annealing process.

A process for sequentially determining an optimal value of the contribution of the orthogonal magnetic field function based on a final state in the annealing process for each qubit that constitutes an optimal solution of the combinatorial optimization problem is defined as an optimization process.

The qubit with an optimal evaluation index for evaluating the final state in the annealing process, in which a field-strength parameter that provides a maximum value of the orthogonal magnetic field function for the qubit before optimization, is defined as an optimal qubit.

The processing method includes the optimization process further including:

extracting the optimal qubit based on phase information of a control qubit in which a variation of the evaluation index caused by a variation in the field-strength parameter is phase-kicked back by a quantum gate circuit (QG); determining the field-strength parameter, which is an optimal value of an extracted optimal qubit, according to the phase information of the control qubit in which the variation is phase-kicked back by the quantum gate circuit; and outputting the optimal solution by mapping a set of the field-strength parameter determined for all qubits.

(Technical idea 13)

A processing program includes instructions, executed by a processor (12) and stored in a storage medium (10), for controlling quantum annealing and a quantum gate for processing qubits to solve a combinatorial optimization problem with the binary variable.

The instructions causes the processor to execute:

an annealing process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function; and an optimization process for sequentially determining an optimal value of the contribution of the orthogonal magnetic field function based on a final state in the annealing process for each qubit that constitutes an optimal solution of the combinatorial optimization problem.

The qubit with an optimal evaluation index for evaluating the final state in the annealing process, in which a field-strength parameter that provides a maximum value of the orthogonal magnetic field function for the qubit before optimization, is defined as an optimal qubit.

The optimization process further includes:

extracting the optimal qubit based on phase information of a control qubit in which a variation of the evaluation index caused by a variation in the field-strength parameter is phase-kicked back by a quantum gate circuit (QG); determining the field-strength parameter, which is an optimal value of an extracted optimal qubit, according to the phase information of the control qubit in which the variation is phase-kicked back by the quantum gate circuit; and outputting the optimal solution by mapping a set of the field-strength parameter determined for all qubits.

(Technical idea 14)

A processing program includes instructions, executed by a processor (12) and stored in a storage medium (10), for controlling quantum annealing and a quantum gate for processing qubits to solve a combinatorial optimization problem with the binary variable.

A process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function, is defined as an annealing process.

A process for sequentially determining an optimal value of the contribution of the orthogonal magnetic field function based on a final state in the annealing process for each qubit that constitutes an optimal solution of the combinatorial optimization problem is defined as an optimization process.

The qubit with an optimal evaluation index for evaluating the final state in the annealing process, in which a field-strength parameter that provides a maximum value of the orthogonal magnetic field function for the qubit before optimization, is defined as an optimal qubit.

The instructions cause the processor to execute the optimization process including:

extracting the optimal qubit based on phase information of a control qubit in which a variation of the evaluation index caused by a variation in the field-strength parameter is phase-kicked back by a quantum gate circuit (QG);
determining the field-strength parameter, which is an optimal value of an extracted optimal qubit, according to the phase information of the control qubit in which the variation is phase-kicked back by the quantum gate circuit; and
outputting the optimal solution by mapping a set of the field-strength parameter determined for all qubits.

The controllers and methods described in the present disclosure may be implemented by a special purpose computer created by configuring a memory and a processor programmed to execute one or more particular functions embodied in computer programs. Alternatively, the controllers and methods described in the present disclosure may be implemented by a special purpose computer created by configuring a processor provided by one or more special purpose hardware logic circuits. Alternatively, the controllers and methods described in the present disclosure may be implemented by one or more special purpose computers created by configuring a combination of a memory and a processor programmed to execute one or more particular functions and a processor provided by one or more hardware logic circuits. The computer programs may be stored, as instructions being executed by a computer, in a tangible non-transitory computer-readable medium.

It is noted that a flowchart or the processing of the flowchart in the present application includes sections (also referred to as steps), each of which is represented, for instance, as S10. Further, each section can be divided into several sub-sections while several sections can be combined into a single section. Furthermore, each of thus configured sections can be also referred to as a device, module, or means.

While the present disclosure has been described with reference to embodiments thereof, it is to be understood that the disclosure is not limited to the embodiments and constructions. The present disclosure is intended to cover various modification and equivalent arrangements. In addition, while the various combinations and configurations, other combinations and configurations, including more, less or only a single element, are also within the spirit and scope of the present disclosure.

**Claims**

1. A processing system for controlling quantum annealing and a quantum gate for processing qubits to solve a combinatorial optimization problem with a binary variable, the processing system comprising:
a processor (12), wherein:

the processor is configured to execute:

an annealing process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function; and
an optimization process for sequentially determining an optimal value of the contribution of the orthogonal magnetic field function for each qubit constituting an optimal solution of the combinatorial optimization problem based on a final state in the annealing process;

the qubit with an optimal evaluation index for evaluating the final state in the annealing process, in which a field-strength parameter that provides a maximum value of the orthogonal magnetic field function for the qubit before optimization, is defined as an optimal qubit; and
the optimization process further includes:

extracting the optimal qubit based on phase information of a control qubit in which a variation of the evaluation index caused by a variation in the field-strength parameter is phase-kicked back by a quantum gate circuit (QG);

determining the field-strength parameter, which is the optimal value of an extracted optimal qubit, according to the phase information of the control qubit in which a variation amount is phase-kicked back by the quantum gate circuit; and

outputting an optimal solution by mapping a set of the field-strength parameter determined for all qubits.

2. The processing system according to claim 1, wherein:
the optimization process further includes: extracting the optimal qubit based on a magnitude of phase change from the phase information of the control qubit in which the variation amount is phase-kicked back by the quantum gate circuit.

3. The processing system according to claim 1, wherein:
the optimization process further includes: determining the field-strength parameter that is the optimal value of the optimal qubit according to a direction of a phase change from the phase information of the control qubit in which the variation amount is phase-kicked back by the quantum gate circuit.

4. The processing system according to any one of claims 1 to 3, wherein:
the optimization process further includes: extracting the optimal qubit having an optimal energy value in the final state as the evaluation index.

5. The processing system according to any one of claims 1 to 3, wherein:
the optimization process further includes: extracting the optimal qubit in which the evaluation index is optimum when the field-strength parameter initialized to 0 for the qubit before optimization.

6. The processing system according to claim 5, wherein:

an initialized field-strength parameter is defined as a reference field-strength parameter;
the field-strength parameter varied from the reference field-strength parameter is defined as a varied field-strength parameter; and
the optimization process further includes: extracting the optimal qubit based on the phase information in which the variation amount caused by a variation of the reference field-strength parameter and the varied field-strength parameter is phase-kicked back by the quantum gate circuit.

7. The processing system according to any one of claims 1 to 3, further comprising:
a storage medium (10), wherein:
the optimization process further includes: storing an optimal solution in the storage medium.

8. The processing system according to any one of claims 1 to 3, wherein:
the annealing process further includes: acquiring the final state of a wave function for a total Hamiltonian of the cost function, the transverse magnetic field function, and the orthogonal magnetic field function based on time control of the total Hamiltonian by the quantum annealing.

9. The processing system according to claim 8, wherein:
the annealing process further includes:

increasing the contribution of the cost function from a zero value to a final value over time;
decreasing the contribution of the transverse magnetic field function from an initial value to a zero value over time; and
increasing the contribution of the orthogonal magnetic field function from a zero value to a maximum value over time and then decreasing the contribution to the zero value over time.

10. A processing device for controlling quantum annealing and a quantum gate for processing qubits to solve a combinatorial optimization problem with a binary variable, the processing device comprising:
a processor (12), wherein:

a process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function is defined as an annealing process; a process for sequentially determining an optimal value of the contribution of the orthogonal magnetic field function for each qubit constituting an optimal solution of the combinatorial optimization problem based on a final state in the annealing process is defined as an optimization process; the qubit with an optimal evaluation index for evaluating the final state in the annealing process, in which a field-strength parameter that provides a maximum value of the orthogonal magnetic field function for the qubit before optimization, is defined as an optimal qubit; and the processor is configured to execute:

extracting the optimal qubit based on phase information of a control qubit in which a variation of the evaluation index caused by a variation in the field-strength parameter is phase-kicked back by a quantum gate circuit (QG);
determining the field-strength parameter, which is the optimal value of an extracted optimal qubit, according to the phase information of the control qubit in which a variation amount is phase-kicked back by the quantum gate circuit; and
outputting an optimal solution by mapping a set of the field-strength parameter determined for all qubits.

11. A processing method executed by a processor (12) for controlling quantum annealing and a quantum gate for processing qubits to solve a combinatorial optimization problem with a binary variable, the processing method comprising:

an annealing process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function; and
an optimization process for sequentially determining an optimal value of the contribution of the orthogonal magnetic field function for each qubit constituting an optimal solution of the combinatorial optimization problem based on a final state in the annealing process, wherein:

the qubit with an optimal evaluation index for evaluating the final state in the annealing process, in which a field-strength parameter that provides a maximum value of the orthogonal magnetic field function for the qubit before optimization, is defined as an optimal qubit; and
the optimization process further includes:

extracting the optimal qubit based on phase information of a control qubit in which a variation of the evaluation index caused by a variation in the field-strength parameter is phase-kicked back by a quantum gate circuit (QG);
determining the field-strength parameter, which is the optimal value of an extracted optimal qubit, according to the phase information of the control qubit in which a variation amount is phase-kicked back by the quantum gate circuit; and
outputting an optimal solution by mapping a set of the field-strength parameter determined for all qubits.

12. A processing method executed by a processor (12) for controlling quantum annealing and a quantum gate for processing qubits to solve a combinatorial optimization problem with a binary variable, wherein:

a process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function, is defined as an annealing process; a process for sequentially determining an optimal value of the contribution of the orthogonal magnetic field function for each qubit constituting an optimal solution of the combinatorial optimization problem based on a final state in the annealing process, is defined as an optimization process; and the qubit with an optimal evaluation index for evaluating the final state in the annealing process, in which a field-strength parameter that provides a maximum value of the orthogonal magnetic field function for the qubit before optimization, is defined as an optimal qubit, the processing method comprising:

the optimization process further including:

extracting the optimal qubit based on phase information of a control qubit in which a variation of the evaluation index caused by a variation in the field-strength parameter is phase-kicked back by a quantum gate circuit (QG);
determining the field-strength parameter, which is the optimal value of an extracted optimal qubit, according to the phase information of the control qubit in which a variation amount is phase-kicked back by the quantum gate circuit; and
outputting an optimal solution by mapping a set of the field-strength parameter determined for all qubits.

13. A processing program comprising: instructions, executed by a processor (12) and stored in a storage medium (10), for controlling quantum annealing and a quantum gate for processing qubits to solve a combinatorial optimization problem with a binary variable, wherein:

the instructions include executing:

an annealing process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function; and
an optimization process for sequentially determining an optimal value of the contribution of the orthogonal magnetic field function for each qubit constituting an optimal solution of the combinatorial optimization problem based on a final state in the annealing process;

the qubit with an optimal evaluation index for evaluating the final state in the annealing process, in which a field-strength parameter that provides a maximum value of the orthogonal magnetic field function for the qubit before optimization, is defined as an optimal qubit; and
the optimization process further includes:

extracting the optimal qubit based on phase information of a control qubit in which a variation of the evaluation index caused by a variation in the field-strength parameter is phase-kicked back by a quantum gate circuit;
determining the field-strength parameter, which is the optimal value of an extracted optimal qubit, according to the phase information of the control qubit in which a variation amount is phase-kicked back by the quantum gate circuit; and
outputting an optimal solution by mapping a set of the field-strength parameter determined for all qubits.

14. A processing program comprising: instructions, executed by a processor (12) and stored in a storage medium (10), for controlling quantum annealing and a quantum gate for processing qubits to solve a combinatorial optimization problem with a binary variable, wherein:

a process for controlling temporally and individually each contribution of a cost function to be optimized in the combinatorial optimization problem, a transverse magnetic field function defining a magnetic field component orthogonal to the cost function, and an orthogonal magnetic field function defining a magnetic field component orthogonal to the cost function and the transverse magnetic field function, is defined as an annealing process;
a process for sequentially determining an optimal value of the contribution of the orthogonal magnetic field function for each qubit constituting an optimal solution of the combinatorial optimization problem based on a final state in the annealing process, is defined as an optimization process;
the qubit with an optimal evaluation index for evaluating the final state in the annealing process, in which a field-strength parameter that provides a maximum value of the orthogonal magnetic field function for the qubit before optimization, is defined as an optimal qubit; and
the instructions includes: executing the optimization process including:

extracting the optimal qubit based on phase information of a control qubit in which a variation of the evaluation index caused by a variation in the field-strength parameter is phase-kicked back by a quantum gate circuit;
determining the field-strength parameter, which is the optimal value of an extracted optimal qubit, according to the phase information of the control qubit in which a variation amount is phase-kicked back by the quantum gate circuit; and
outputting an optimal solution by mapping a set of field-strength parameters determined for all qubits.

# FIG. 1

# FIG. 2

FIG. 3

FIG. 4

# FIG. 5

# FIG. 6

| SENS ANALY ROUT W/ NUM OF REPET: 1ST | | | | | | | | | | | |
| --- | --- | --- | --- | --- | --- | --- | --- | --- | --- | --- | --- |
| index | $c_i$ | | | | | | | | $\psi_{\_f}$ | F | |
| i | $c_1$ | $c_2$ | $c_3$ | $c_4$ | $c_5$ | $c_6$ | $c_7$ | $c_8$ | $\psi_{i\_f}$ | $F_i$ | $P_i(0, \varepsilon)$ |
| 1 | $c_{1\_f}(\Delta)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_b}(0)$ | $\psi_{1\_f}$ | $F_1$ | $P_1(0, 0)$ |
| 2 | $c_{1\_b}(0)$ | $c_{2\_f}(\Delta)$ | $c_{3\_b}(0)$ | $c_{4\_b}(0)$ | $c_{5\_b}(0)$ | $c_{6\_b}(0)$ | $c_{7\_b}(0)$ | $c_{8\_b}(0)$ | $\psi_{2\_f}$ | $F_2$ | $P_2(0, 0)$ |
| 3 | $c_{1\_b}(0)$ | $c_{2\_b}(0)$ | $c_{3\_f}(\Delta)$ | $c_{4\_b}(0)$ | $c_{5\_b}(0)$ | $c_{6\_b}(0)$ | $c_{7\_b}(0)$ | $c_{8\_b}(0)$ | $\psi_{3\_f}$ | $F_3$ | $P_3(0, 0)$ |
| 4 | $c_{1\_b}(0)$ | $c_{2\_b}(0)$ | $c_{3\_b}(0)$ | $c_{4\_f}(\Delta)$ | $c_{5\_b}(0)$ | $c_{6\_b}(0)$ | $c_{7\_b}(0)$ | $c_{8\_b}(0)$ | $\psi_{4\_f}$ | $F_4$ | $P_4(0, 0)$ |
| 5 | $c_{1\_b}(0)$ | $c_{2\_b}(0)$ | $c_{3\_b}(0)$ | $c_{4\_b}(0)$ | $c_{5\_f}(\Delta)$ | $c_{6\_b}(0)$ | $c_{7\_b}(0)$ | $c_{8\_b}(0)$ | $\psi_{5\_f}$ | $F_5$ | $P_5(0, 0)$ |
| 6 | $c_{1\_b}(0)$ | $c_{2\_b}(0)$ | $c_{3\_b}(0)$ | $c_{4\_b}(0)$ | $c_{5\_b}(0)$ | $c_{6\_f}(\Delta)$ | $c_{7\_b}(0)$ | $c_{8\_b}(0)$ | $\psi_{6\_f}$ | $F_6$ | $P_6(0, 0)$ |
| 7 | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_f}(\Delta)$ | $c_{8\_b}(0)$ | $\psi_{7\_f}$ | $F_7$ | $P_7(0, 0)$ |
| 8 | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_f}(\Delta)$ | $\psi_{8\_f}$ | $F_8$ | $P_8(0, 0)$ $P_8(0, \varepsilon)$ |
| base-line | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_b}(0)$ | $\psi_{b\_f}$ | $F_b$ | – |

EP 4 270 262 A1

EP 4 270 262 A1

# FIG. 7

| | | | | | | | | | $\psi_{\_f}$ | F | |
|---|---|---|---|---|---|---|---|---|---|---|---|
| | SENS ANALY ROUT W/ NUM OF REPET: 2ND | | | | | | | | | | |
| index | $c_i$ | | | | | | | | $\psi_{\_f}$ | F | $P_i(0,\varepsilon)$ |
| i | $c_1$ | $c_2$ | $c_3$ | $c_4$ | $c_5$ | $c_6$ | $c_7$ | $c_8$ | $\psi_{i\_f}$ | $F_i$ | |
| 1 | $c_{1\_f}(\Delta)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_o}$ | $\psi_{1\_f}$ | $F_1$ | $P_1(0,0)$ |
| 2 | $c_{1\_b}(0)$ | $c_{2\_f}(\Delta)$ | $c_{3\_b}(0)$ | $c_{4\_b}(0)$ | $c_{5\_b}(0)$ | $c_{6\_b}(0)$ | $c_{7\_b}(0)$ | $c_{8\_o}$ | $\psi_{2\_f}$ | $F_2$ | $P_2(0,0)$ |
| 3 | $c_{1\_b}(0)$ | $c_{2\_b}(0)$ | $c_{3\_f}(\Delta)$ | $c_{4\_b}(0)$ | $c_{5\_b}(0)$ | $c_{6\_b}(0)$ | $c_{7\_b}(0)$ | $c_{8\_o}$ | $\psi_{3\_f}$ | $F_3$ | $P_3(0,0)$ |
| 4 | $c_{1\_b}(0)$ | $c_{2\_b}(0)$ | $c_{3\_b}(0)$ | $c_{4\_f}(\Delta)$ | $c_{5\_b}(0)$ | $c_{6\_b}(0)$ | $c_{7\_b}(0)$ | $c_{8\_o}$ | $\psi_{4\_f}$ | $F_4$ | $P_4(0,0)$ |
| 5 | $c_{1\_b}(0)$ | $c_{2\_b}(0)$ | $c_{3\_b}(0)$ | $c_{4\_b}(0)$ | $c_{5\_f}(\Delta)$ | $c_{6\_b}(0)$ | $c_{7\_b}(0)$ | $c_{8\_o}$ | $\psi_{5\_f}$ | $F_5$ | $P_5(0,0)$ |
| 6 | $c_{1\_b}(0)$ | $c_{2\_b}(0)$ | $c_{3\_b}(0)$ | $c_{4\_b}(0)$ | $c_{5\_b}(0)$ | $c_{6\_f}(\Delta)$ | $c_{7\_b}(0)$ | $c_{8\_o}$ | $\psi_{6\_f}$ | $F_6$ | $P_6(0,0)$ $P_6(0,\varepsilon)$ |
| 7 | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_f}(\Delta)$ | $c_{8\_o}$ | $\psi_{7\_f}$ | $F_7$ | $P_7(0,0)$ |
| 8 | – | – | – | – | – | – | – | – | – | – | – |
| base -line | $c_{1\_b}(0)$ | $c_{2\_b}(0)$ | $c_{3\_b}(0)$ | $c_{4\_b}(0)$ | $c_{5\_b}(0)$ | $c_{6\_b}(0)$ | $c_{7\_b}(0)$ | $c_{8\_o}$ | $\psi_{b\_f}$ | $F_b$ | – |

# FIG. 8

| SENS ANALY ROUT W/ NUM OF REPET: 3RD | | | | | | | | | | | |
|---|---|---|---|---|---|---|---|---|---|---|---|
| index | $c_i$ | | | | | | | | $\psi_{\_f}$ | $F$ | |
| $i$ | $c_1$ | $c_2$ | $c_3$ | $c_4$ | $c_5$ | $c_6$ | $c_7$ | $c_8$ | $\psi_{i\_f}$ | $F_i$ | $P_i(0, \varepsilon)$ |
| 1 | $c_{1\_f}(\Delta)$ | $c_{2\_b}(0)$ | $c_{3\_b}(0)$ | $c_{4\_b}(0)$ | $c_{5\_b}(0)$ | $c_{6\_o}$ | $c_{7\_b}(0)$ | $c_{8\_o}$ | $\psi_{1\_f}$ | $F_1$ | $P_1(0, 0)$ |
| 2 | $c_{1\_b}(0)$ | $c_{2\_f}(\Delta)$ | $c_{3\_b}(0)$ | $c_{4\_b}(0)$ | $c_{5\_b}(0)$ | $c_{6\_o}$ | $c_{7\_b}(0)$ | $c_{8\_o}$ | $\psi_{2\_f}$ | $F_2$ | $P_2(0, 0)$<br>$P_2(0, \varepsilon)$ |
| 3 | $c_{1\_b}(0)$ | $c_{2\_b}(0)$ | $c_{3\_f}(\Delta)$ | $c_{4\_b}(0)$ | $c_{5\_b}(0)$ | $c_{6\_o}$ | $c_{7\_b}(0)$ | $c_{8\_o}$ | $\psi_{3\_f}$ | $F_3$ | $P_3(0, 0)$ |
| 4 | $c_{1\_b}(0)$ | $c_{2\_b}(0)$ | $c_{3\_b}(0)$ | $c_{4\_f}(\Delta)$ | $c_{5\_b}(0)$ | $c_{6\_o}$ | $c_{7\_b}(0)$ | $c_{8\_o}$ | $\psi_{4\_f}$ | $F_4$ | $P_4(0, 0)$ |
| 5 | $c_{1\_b}(0)$ | $c_{2\_b}(0)$ | $c_{3\_b}(0)$ | $c_{4\_b}(0)$ | $c_{5\_f}(\Delta)$ | $c_{6\_o}$ | $c_{7\_b}(0)$ | $c_{8\_o}$ | $\psi_{5\_f}$ | $F_5$ | $P_5(0, 0)$ |
| 6 | – | – | – | – | – | – | – | – | – | – | – |
| 7 | $c_{1\_b}(0)$ | $c_{2\_b}(0)$ | $c_{3\_b}(0)$ | $c_{4\_b}(0)$ | $c_{5\_b}(0)$ | $c_{6\_o}$ | $c_{7\_f}(\Delta)$ | $c_{8\_o}$ | $\psi_{7\_f}$ | $F_7$ | $P_7(0, 0)$ |
| 8 | – | – | – | – | – | – | – | – | – | – | – |
| base-line | $c_{1\_b}(0)$ | $c_{2\_b}(0)$ | $c_{3\_b}(0)$ | $c_{4\_b}(0)$ | $c_{5\_b}(0)$ | $c_{6\_o}$ | $c_{7\_b}(0)$ | $c_{8\_o}$ | $\psi_{b\_f}$ | $F_b$ | – |

EP 4 270 262 A1

# FIG. 9

| SENS ANALY ROUT W/ NUM OF REPET: 8TH | | | | | | | | | | | |
|---|---|---|---|---|---|---|---|---|---|---|---|
| index | $c_i$ | | | | | | | | $\psi_{\_f}$ | $F$ | $P_i(0, \varepsilon)$ |
| $I$ | $c_1$ | $c_2$ | $c_3$ | $c_4$ | $c_5$ | $c_6$ | $c_7$ | $c_8$ | $\psi_{i\_f}$ | $F_i$ | |
| 1 | – | – | – | – | – | – | – | – | – | – | – |
| 2 | – | – | – | – | – | – | – | – | – | – | – |
| 3 | – | – | – | – | – | – | – | – | – | – | – |
| 4 | – | – | – | – | – | – | – | – | – | – | – |
| 5 | $c_{1\_o}$ | $c_{2\_o}$ | $c_{3\_o}$ | $c_{4\_o}$ | $c_{5\_f}(\Delta)$ | $c_{6\_o}$ | $c_{7\_o}$ | $c_{8\_o}$ | $\psi_{5\_f}$ | $F_5$ | $P_5(0, 0)$ $P_5(0, \varepsilon)$ |
| 6 | – | – | – | – | – | – | – | – | – | – | – |
| 7 | – | – | – | – | – | – | – | – | – | – | – |
| 8 | – | – | – | – | – | – | – | – | – | – | – |
| base –line | $c_{1\_o}$ | $c_{2\_o}$ | $c_{3\_o}$ | $c_{4\_o}$ | $c_{5\_b}(0)$ | $c_{6\_o}$ | $c_{7\_o}$ | $c_{8\_o}$ | $\psi_{b\_f}$ | $F_b$ | – |

EP 4 270 262 A1

# FIG. 10

# FIG. 11

# FIG. 12

**QA PROC**

S20: ACQ ANALY FINAL STA $\Psi_{i\_f}$, AND ACQ REF FINAL STA $\Psi_{b\_f}$

QUANTUM GATE CIR

S30: OUTPUT PROB $Pi(0, 0)$

QUANTUM GATE CIR

S40: OUTPUT PROB $Pi(0, \varepsilon)$

**QGO PROC**

S10: INITIALIZE REF INT PARA $c_{i\_b}$

S11: SET VAR INT PARA $c_{i\_f}$

S12: PASS OVER PARAS $c_{i\_b}$, $c_{i\_f}$, $c_{i\_o}$

S120: PASS OVER PARAS $c_{i\_b}$, $c_{i\_f}$

S121: INSTRUCT PASS OVER FINAL STA $\Psi_{i\_f}$, $\Psi_{b\_f}$

S122: EXTRACT OPT QUBIT Qo

S123: INSTRUCT PASS OVER FINAL STA $\Psi_{i\_f}$, $\Psi_{b\_f}$

S124: DETERMINE OPT INT PARA $c_{i\_o}$

S125: DET OF PARAMTER $c_{i\_o}$ COMPLETED? — NO / YES

S126: PASS OVER PARAS $c_{i\_b}$, $c_{i\_f}$, $c_{i\_o}$

S127: OUTPUT/STORE OPT SOL OA BY MAP SET OF OPT INT PARA $c_{i\_o}$

END

SENS ANALY SUB-ROUT

Europäisches
Patentamt

European
Patent Office

Office européen
des brevets

# EUROPEAN SEARCH REPORT

**Application Number**

EP 23 16 8771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KADOWAKI TADASHI ET AL: "Greedy parameter optimization for diabatic quantum annealing", PHILOSOPHICAL TRANSACTIONS A .MATHEMATICAL, PHYSICAL AND ENGINEERING SCIENCES, vol. 381, no. 2241, 26 November 2021 (2021-11-26), XP093057060, GB ISSN: 1364-503X, DOI: 10.1098/rsta.2021.0416 Retrieved from the Internet: URL:https://arxiv.org/pdf/2111.13287v1.pdf > * the whole document * ----- | 1-14 | INV. G06N10/60 ADD. G06N5/01 |
| A | US 2020/334564 A1 (MOHSENI MASOUD [US] ET AL) 22 October 2020 (2020-10-22) * abstract * * paragraph [0041] – paragraph [0074] * ----- | 1-14 | |

**TECHNICAL FIELDS SEARCHED (IPC)**

G06N

The present search report has been drawn up for all claims

| Place of search | Date of completion of the search | Examiner |
|---|---|---|
| The Hague | 26 June 2023 | Papadakis, Georgios |

EPO FORM 1503 03.82 (P04C01)

**ANNEX TO THE EUROPEAN SEARCH REPORT
ON EUROPEAN PATENT APPLICATION NO.**

EP 23 16 8771

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2023

| Patent document cited in search report | | Publication date | Patent family member(s) | | Publication date |
|---|---|---|---|---|---|
| US 2020334564 | A1 | 22-10-2020 | AU | 2018395427 A1 | 16-07-2020 |
| | | | AU | 2021225163 A1 | 30-09-2021 |
| | | | AU | 2022291648 A1 | 02-02-2023 |
| | | | CA | 3087247 A1 | 04-07-2019 |
| | | | CN | 111527503 A | 11-08-2020 |
| | | | EP | 3732634 A1 | 04-11-2020 |
| | | | US | 2020334564 A1 | 22-10-2020 |
| | | | WO | 2019133889 A1 | 04-07-2019 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TADASHI KADOWAKI ; HIDETOSHI NISHIMORI.** Quantum annealing in the transverse Ising model. *Phys. Rev. E,* 1998, vol. 58, 5355